# EUROPEAN PATENT APPLICATION

(11) **EP 0 769 789 A2**
(43) Date of publication of application: **23.04.1997**
(21) Application number: 96116410.0
(22) Date of filing: 14.10.1996
(51) Int. Cl.: H01B 7/02

(54) **Improvements in an electric cable with PVC resin-based insulating layer**

(30) Priority: 19.10.1995 IT TO950843
(71) Applicant: Bicc Ceat Cavi S.r.l., 10036 Settimo Torinese (Torino) (IT)
(72) Inventor: Beretta,Germano, 20052 Monza (IT); Cecconello,Flavio, 10040 Fraz.Bardassano,Gassino (IT)
(74) Representative: Gerbino, Angelo

(57) **Abstract**

An electric cable, in particular a power cable, for signalling, control or data transmission, comprises an electrically conductive core (1) clad in at least one first insulating layer (2) formed by a PVC resin-based mixture with stabilising and plasticising additives. This mixture includes from 2 to 12 parts by weight of stabiliser per 100 parts by weight of PVC resin, chosen from the group consisting of salts of calcium, zinc, magnesium, aluminium and their mixtures, and from 8 to 130 parts by weight of plasticiser having a gel temperature less than 105°C, preferably of the phosphoric ester type.

## Description

The present invention relates to an electrical cable, in particular a power cable, for signalling, control or data transmission, comprising an electrically conductive core clad with at least a first insulating layer formed by a mixture based on PVC resin with added stabilisers and plasticisers.

Resins of this type have been widely used up to now for the production of insulating layers of cables by virtue of the simplicity of preparation of the relative mixtures, their easy application to the metal conductors and their limited cost.

Cables with PVC based resin insulation have good mechanical, thermal and electrical characteristics and fall with wide safety margins into the requirements envisaged by the current world wide regulations. The use of insulating layers based on PVC is, however, limited to low and mid voltage cables. In fact the strong polarity of PVC, due to the presence of a chlorine atom in each monomeric unit, makes its electrical characteristics (insulation resistance, dielectric loss and the like) insufficient for high voltage cables (from 20 to 400/500 kV).

The presence of a stabiliser in the PVC resin-based mixture is dictated by the necessity to resist the tendency of these types of resin to decompose at temperatures slightly greater than ambient temperatures with unwanted emission of hydrochloric acid. Known stabilisers are largely constituted by basic salts able to neutralise into the form of chloride the first traces of hydrochloric acid emitted by the PVC which, if not blocked, would catalyse the further decomposition of the mixture up to its total destruction.

In particular, in the electrical field the use of basic salts of lead as stabilisers has become established in that these latter guarantee more than others a good resistance to heat, thermal ageing and atmospheric agents, conferring on the insulating layers good electrical characteristics even after extended time under water. This property common to the whole range of basic salts of lead in use (tribasic sulphate, dibasic phosphite, dibasic stearate, dibasic phthalate and the like) goes back to the fact that the lead chloride generated in the PVC resin stabilisation process is insoluble in water and does not, in use in a wet environment, cause - as do other stabilisers not based on lead - any absorption of water by osmosis on the part of the insulating layer with consequent reduction in its electrical properties.

Recently, however, in line with the greater sensitivity in relation to problems of environmental health, the more developed countries have developed a tendency to eliminate or at least reduce in consumer goods the use of heavy metals, among them lead, susceptible of damaging public health both directly and indirectly following recycling or disposal.

This tendency has already provoked the introduction of legislative arrangements aimed at banning the use of heavy metals in products involved in the food chain such as, for example, containers and packaging for foodstuffs, and it is to be foreseen that corresponding regulations will be introduced soon even for other types of products such as electrical materials.

The object of the present invention is therefore that of providing an electrical cable with a PVC resin-based insulating layer which will be free from lead-based stabilisers and which at the same time will have properties not substantially inferior to those of known cables having an insulating layer including this latter type of stabilisers.

This object is achieved by means of a cable of the type mentioned at the introduction of the present description and characterised by the fact that the said mixture comprises, for 100 parts by weight of PVC resin, from 2 to 12 parts by weight of stabiliser chosen from the group consisting of salts of calcium, zinc, magnesium, aluminium and their mixtures and 8 to 130 parts by weight of plasticiser having a gel temperature less than 105°C.

Cables according to the invention are different from known cables both as far as the stabilisers used are concerned, the replacement of which constituted the object which we set out to achieve, and as far as the plasticisers are concerned.

In fact instead of using only phthalates as conventionally occurred, plasticisers having a low gel temperature are used, in particular phosphoric esters to which possibly conventional plasticisers of phthalate type can be added.

By the term "gel temperature" is intended the temperature at which small grains of PVC immersed in an excess of plasticiser under test disappear under visual microscopic examination. The test is conducted on a heating plate positioned under the microscope with a continuous increase of temperature of 2°C per minute.

Table I shows the gel temperature of a phosphoric ester usable according to the present invention, in comparison with the more common phthalate esters utilised for the mixtures in use in the field of electrical cables.

**TABLE 1**

| GEL TEMPERATURE | |
|---|---|
| Plasticiser | T (°C) |
| Isopropyl-phenyl-phosphate (phosphoric ester) | 98 |
| DOP(di-(2-ethylhexyl)phthalate) | 118 |
| DIDP (diisodecyl phthalate) | 138 |
| DTDP (ditridecyl phthalate) | 150 |

Plasticisers having low gel temperatures allow gelling and extruding the said mixture at lower temperatures than those currently in use, in such a way as to avoid a partial disactivation of the salts of calcium, zinc, magnesium and aluminium which function as stabilisers and are more sensitive to high temperatures than lead-based salts.

Therefore, thanks to the action exerted by the said plasticisers, the level of stabilisation of the insulating layers of cables of the invention is substantially similar to that of known cables without having to have recourse to the use of heavy metal salts, in particular salts of lead.

Preferably, the said mixture contains from 25 to 80 parts by weight of plasticiser having a gel temperature less than 105°C per 100 parts by weight of resin.

By way of example, among phosphoric esters used as plasticisers it is possible to cite the isopropyl-phenyl-phosphates obtained from synthetic starting materials, and also isopropyl-triaryl-phosphate, butyl-triaryl-phosphate, isodecyl-diphenyl-phosphate, 2-ethylhexyl-diphenyl-phosphate, tri-(1,3-dichloroisopropyl)phosphate and trixylyl-phosphate.

Still by way of example of salts of calcium, zinc, magnesium and aluminium utilised as stabilisers, one can cite basic salts of calcium/zinc, mixed stearate of calcium/zinc in mixture with epoxidised soya bean oil, soaps of calcium, zinc, basic carbonate of magnesium/aluminium, salts and soaps of magnesium/aluminium.

The mixture of the insulating layer of the cable of the invention can moreover include all the known additives usually utilised, for example fireproof minerals if it is desired that the cable should have characteristics of flame resistance.

In a preferred embodiment, the cable of the invention comprises a second insulating layer disposed coaxially outside the first insulating layer and formed by a polyolefin resin-based thermoplastic mixture.

The second insulating layer gives the cable adequate insulating characteristics even after a long immersion in water.

Preferably the said polyolefin resin is chosen from the group comprising both high and low density polyethylene, in particular of linear type, and polypropylene, and the second insulating layer has a thickness lying between 2 and 20% of the thickness of the first insulating layer.

In a further preferred embodiment the cable of the invention comprises, outside the said insulating layer or layers, a first sheath formed by a PVC resin-based mixture preferably of the above-mentioned type and further including from 0.1 to 5 parts by weight of carbon black per 100 parts of resin.

This first sheath functions as a protective element against atmospheric agents.

The cable of the invention can further comprise, outside the said first sheath, a second sheath formed by a PVC resin-based mixture, preferably of the above-mentioned type and further including from 0.1 to 5 parts by weight of colouring pigment per 100 parts of resin.

Depending on the type of pigment used the second sheath can assume any desired colour - in contrast with the first sheath the carbon black in which confers a dark colour - so as to satisfy the regulations and/or particular requirements of the user.

Preferably the second sheath has a thickness lying between 2 and 20% of the thickness of the first sheath.

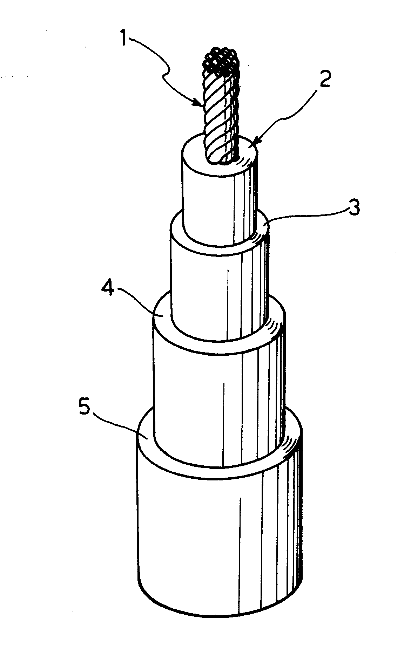

Further characteristics and advantages of the present invention will become apparent from the following detailed description, made with reference to the attached drawings provided purely by way of non-limitative example, in which:
the single figure is a perspective view of a section of cable according to the invention with parts partially removed to show the structure thereof.

An electrical cable, in particular a power cable, for signalling, control or data transmission, comprises an electrically conductive core 1 formed by a plurality of twisted wires, for example of copper or aluminium. Proceeding outwardly, the core 1 is successively surrounded by a first insulating layer 2, a second insulating layer 3, a first sheath 4 and a second sheath 5. With a core cross-section equal for example to 1.5 mm² the thicknesses of the layers 2 and 3 and of the sheaths 4 and 5 can then by way of indication be respectively 0.7 mm, 0.1 mm, 2 mm and 0.2 mm.

A mixture used for the formation of the first insulating layer 2 has for example the following formulation:

| | |
|---|---|
| - polyvinyl chloride | 100 parts by weight |
| - phosphoric-ester plasticiser | 50 parts by weight |
| - calcium carbonate, mineral filler | 30 parts by weight |
| - magnesium carbonate, mineral filler | 30 parts by weight |
| - stabiliser, mixed stearate of Ca/Zn | 3 parts by weight |
| - stabiliser, basic carbonate of Mg/Al | 3 parts by weight |
| - lubricant, stearic acid | 0.5 parts by weight |
| - antioxidant, bisphenol A | 0.2 parts by weight |

A mixture used for the formation of the second insulating layer 3 has for example the following formulation:

| | |
|---|---|
| - low density polyethylene M.I. 0.2 | 99.5 parts by weight |
| - antioxidant, bisphenol A | 0.5 parts by weight |

A mixture used for the formation of the first sheath 4 has for example the following formulation:

| | |
|---|---|
| - polyvinyl chloride | 100 parts by weight |
| - plasticiser, phosphoric ester | 55 parts by weight |
| - mineral filler, calcium carbonate | 30 parts by weight |
| - mineral filler, magnesium carbonate | 30 parts by weight |
| - stabiliser, mixed stearate of Ca/Zn | 3 parts by weight |
| - stabiliser, basic carbonate of Mg/Al | 3 parts by weight |
| - lubricant, stearic acid | 0.5 parts by weight |
| - antioxidant, bisphenol A | 0.2 parts by weight |
| - carbon black of great fineness | 1.5 parts by weight |

A mixture used for the formation of the second sheath 5 has for example the following formulation:

| | |
|---|---|
| - polyvinyl chloride | 100 parts by weight |
| - plasticiser, phosphoric ester | 55 parts by weight |
| - mineral filler, calcium carbonate | 30 parts by weight |
| - mineral filler, magnesium carbonate | 30 parts by weight |
| - stabiliser, mixed Ca/Zn stearate | 3 parts by weight |
| - stabiliser, basic carbonate of Mg/Al | 3 parts by weight |
| - lubricant, stearic acid | 0.5 parts by weight |
| - antioxidant, bisphenol A | 0.2 parts by weight |
| - colorant, red organic pigment | 0.3 parts by weight |

In the production of the said mixtures, in particular the PVC resin-based mixtures, and in their application on to the conductive core 1 working cycles have been adopted at lower temperatures than those conventionally in use for conventional mixtures containing only lead stabilisers and phthalic plasticisers. In particular the temperature in an open laboratory mixer lay between 148°C and 152°C rather than between 168°C and 172°C.

Experimental tests were conducted for the purpose of establishing the chemical/physical and electrical characteristics of the cables of the invention and to establish their substantial identity with those of known cables.

For this purpose several cables having the above-described structure, but different formulations of the mixture which is utilised directly for the production of the insulating layer 2 and, after the addition of carbon black and pigments respectively, for the production of the first and second sheath, were tested.

Table II plots these different formulations. In particular the formulation C corresponds to that given above by way of example of the invention, whilst formulations D and E represent variants of this latter in which, as plasticiser there was used, as well as phosphoric ester, also 2-ethyl-hexyl-phthalate. On the other hand the formulations A and B serve as examples for comparison. Formulation A is an example of the prior art formulation with lead stabiliser and plasticiser of phthalate type, whilst formulation B is free of lead stabiliser and contains plasticiser exclusively of the phthalate type.

**TABLE II**

| INGREDIENT | MIXTURE (comparison) | | | | |
|---|---|---|---|---|---|
| | A | B | C | D | E |
| - polyvinyl chloride | 100 | 100 | 100 | 100 | 100 |
| - DOP phthalate plasticiser | 50 | 50 | - | 25 | 40 |
| - phosphoric ester plasticiser | - | - | 50 | 25 | 10 |
| - calcium carbonate | 30 | 30 | 30 | 30 | 30 |
| - magnesium carbonate | 30 | 30 | 30 | 30 | 30 |
| - tribasic lead sulphate | 5 | - | - | - | - |
| - stabiliser, mixed Ca/Zn stearate | - | 3 | 3 | 3 | 3 |
| - stabiliser, basic carbonate of Mg/Al | - | 3 | 3 | 3 | 3 |
| - lubricant, stearic acid | 0.5 | 0.5 | 0.5 | 0.5 | 0.5 |
| - antioxidant, bisphenol A | 0.2 | 0.2 | 0.2 | 0.2 | 0.2 |

Table III sets out the structure of five cables having an insulating layer 2 made starting from a respective formulation A-E (c.f. Table II) and insulating layer 3 and sheath 4, 5 as indicated there, and further sets out the values of some properties of these cables measured according to CEI 2011 rules and others.

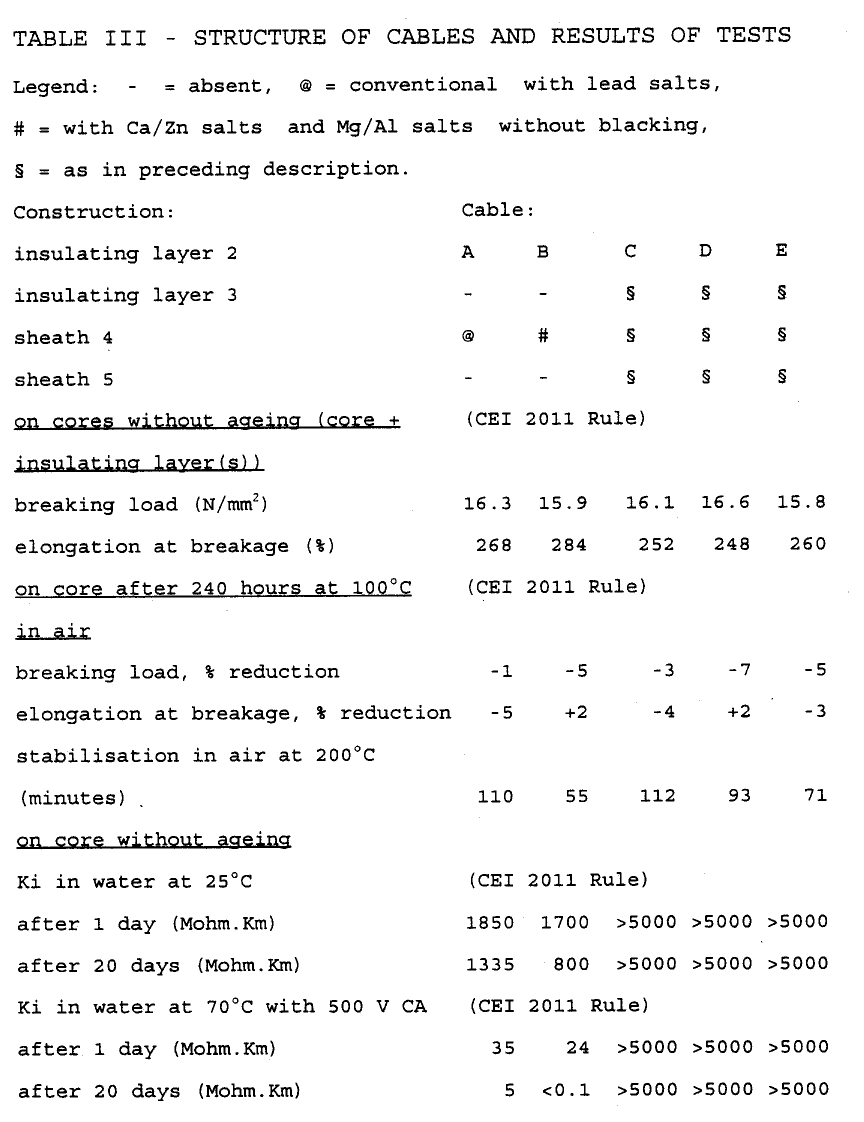

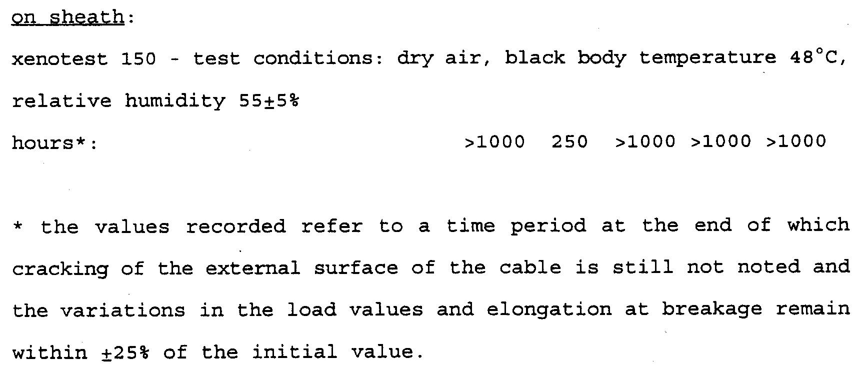

Naturally, the principle of the invention remaining the same, the details of construction and embodiments can be widely varied with respect to what has been described and illustrated purely by way of example, without by this departing from its ambit.

## Claims

1. An electrical cable, in particular a power cable, for signalling, control or data transmission, comprising an electrically conductive core (1) clad in at least one first insulating layer (2) formed by a PVC resin-based mixture with an added stabiliser and plasticiser, the said cable being characterised in that the said mixture comprises from 2 to 12 parts by weight of stabiliser chosen from the group comprising salts of calcium, zinc, magnesium, aluminium and their mixtures and 8 to 130 parts by weight of plasticiser having a gel temperature less than 105°C per 100 parts by weight of PVC resin.

2. A cable according to Claim 1, characterised in that the plasticiser of the said mixture is of phosphoric ester type, in particular an isopropyl-phenyl-phosphate.

3. A cable according to any of the preceding claims, characterised in that the said mixture further includes plasticisers of phthalic type.

4. A cable according to any preceding claim, characterised in that the said mixture contains from 25 to 80 parts by weight of plasticiser having a gel temperature less than 105°C per 100 parts by weight of resin.

5. A cable according to any preceding claim, characterised in that it includes a second insulating layer (3) disposed coaxially outside the first insulating layer (2) and formed by a polyolefin resin-based thermoplastic mixture.

6. A cable according to Claim 5, characterised in that the said polyolefin resin is chosen from the group consisting of both high and low density polyethylene, in particular low density linear type, and polypropylene.

7. A cable according to Claim 5 or Claim 6, characterised in that the said second insulating layer (3) has a thickness lying between 2 and 20% of the thickness of the first insulating layer (2).

8. A cable according to any preceding claim, characterised in that it comprises, outside the said insulating layer(s) ( 2, 3), a first sheath (4) formed by a PVC resin-based mixture, preferably of the said type and further including from 0.1 to 5 parts by weight of carbon black per 100 parts of resin.

9. A cable according to Claim 8, characterised in that it includes, outside the said first sheath (4), a second sheath (5) formed by a PVC resin-based mixture, preferably of the above-mentioned type and further including from 0.1 to 5 parts by weight of colouring pigment per 100 parts of resin.

10. A cable according to Claim 9, characterised in that the said second sheath (5) has a thickness lying between 2 and 20% of the thickness of the first sheath (4).
